# EUROPÄISCHE PATENTSCHRIFT

(11) **EP 2 338 677 B1**
(45) Veröffentlichungstag und Bekanntmachung des Hinweises auf die Patenterteilung: **08.02.2012**
(21) Anmeldenummer: 09180281.9
(22) Anmeldetag: 22.12.2009
(51) Int. Cl.: B32B 5/18, B32B 5/26, B32B 3/24, B60N 2/58, B32B 27/02, B32B 27/08, B32B 27/12, B32B 27/34, B32B 27/36, B32B 27/40

(54) **Verfahren zum Herstellen einer Verbundstoffbahn, insbesondere zur Verwendung für Bezüge von Fahrzeugsitzen**
Method for producing a composite sheet, in particular for use for vehicle seat covers
Procédé de fabrication d'une bande de matière composite, notamment pour l'utilisation pour appointements de sièges de véhicules

(43) Veröffentlichungstag der Anmeldung: 29.06.2011
(73) Patentinhaber: Mattes & Ammann GmbH & Co. KG, 72469 Messstetten (Tieringen) (DE)
(72) Erfinder: Larsen, Sven Christoph, 72469 Messstetten-Tieringen (DE)
(74) Vertreter: von Eichel-Streiber, Caspar

(56) Entgegenhaltungen:
- DE-U1-202006 009 789
- FR-A1- 2 131 852

## Beschreibung

Die Erfindung betrifft einen Bezugsstoff für Fahr- und Flugzeugsitze.

Fahrzeug- und Flugzeugsitze erfahren auf den Sitz- und Lehnenflächen hohe Beanspruchung. Darüber hinaus sitzen Personen über teilweise sehr lange Zeiträume auf diesen Sitzen, sodass der Sitzkomfort eine erhebliche Rolle spielt.

Dabei kommt es neben anderen Aspekten insbesondere auch auf eine gute Atmungsaktivität des Obermaterials (Bezugsstoffes) des Sitzes an. Ein Maß für die Atmungsaktivität, die einerseits eine Be- bzw. Entlüftung, andererseits aber auch einen Feuchtigkeitstransport mit beinhaltet, ist die Luftdurchlässigkeit des Verbundstoffes.

In der DE 20 2006 009 789 U1 ist ein Verbundstoffsystem beschrieben, das im Kern eine Schaumkunststoffbahn aus einem Polyurethanetherschaumstoff und in Sandwichbauweise auf diesen oberseitig und unterseitig aufkaschierte Maschenwarenbahnen enthält. Je nach Gesamtdicke der Bahn (gegeben sind hier Stärken zwischen 2 und 14 Millimeter) werden dort zwischen 160 und 210 l/min als Wert für eine Luftdurchlässigkeit durch eine Prüffläche von 20 cm² bei einem Differenzdruck von 2 mbar erreicht.

Diese bereits hohen Werte für die Luftdurchlässigkeit können mit dem in dieser Druckschrift beschriebenen System aufgrund der besonderen Wahl des Schaumkunststoffkernes erreicht werden, bei dem es sich wie erwähnt um einen Schaumkunststoff aus einem Polyurethanetherschaum handelt, der insbesondere ein Raumgewicht von 40 bis 50 kg/m³ bei einer Stauchhärte von 4,5 bis 7,5 kPa aufweist. Dieser Verbundstoff kann zum Beispiel auf einer Unterseite mit einer Charmeuse, auf einer Oberseite mit einem robusten Velours kaschiert sein.

Auch wenn mit dem in der genannten Schrift offenbarten Verbundstoff bereits gute Ergebnisse hinsichtlich des Sitzkomforts von damit überspannten Fahrzeug- bzw. Flugzeugsitzen erreicht werden können, gibt es nach wie vor einen Verbesserungsbedarf hinsichtlich des Atmungsverhaltens und somit der Luftdurchlässigkeit von derartigem Material.

Hier eine Verbesserung zu schaffen haben sich die Erfinder zur Aufgabe gemacht.

Die Lösung dieser Aufgabe besteht erfindungsgemäß in einem Bezugsstoff mit den Merkmalen des Patentanspruchs 1; vorteilhafte Weiterbildungen sind in den abhängigen Ansprüchen 2 bis 6 angegeben.

Der wesentliche Aspekt der Erfindung besteht darin, dass zur Verbesserung der Luftdurchlässigkeit der Verbundstoffbahn der bereits mit der ersten Maschenwarenbahn unterseitig kaschierte Schaumkunststoff (die Schaumkunststoffbahn) perforiert wird. Dieser erste Teilverbund, bestehend aus der unterseitig auf die Schaumkunststoffbahn kaschierten Maschenwarenbahn wird also insgesamt mit quer zur Ebene dieser Bahn verlaufenden Perforierungen versehen, die dann gleichermaßen Kanäle für einen besseren Lufttransport und damit eine Erhöhung der Luftdurchlässigkeit bilden.

Wesentliche Erkenntnis dabei ist, dass eine solche Perforierung an dem gesamten Teilverbund der unterseitig bereits fest mit der ersten Maschenwarenbahn verbundenen (kaschierten) Schaumkunststoffbahn durchzuführen ist. Hier haben die Erfinder erkannt, dass bei der Perforierung entstehende Verletzungen der ersten Maschenwarenbahn keinen tauglichkeitsmindernden Einfluss auf den späteren Verbundstoff haben. Hingegen hat die Perforierung auch der ersten Maschenbahn zur Folge, dass auch diese, die ja ebenfalls eine grundsätzliche Barriere für den Luft- bzw. Feuchtigkeitstransport darstellt, geöffnet wird für einen entsprechenden Luftdurchgang.

Dieses so vorbereitete Halbfabrikat bzw. der Halbverbund aus den durch Kaschieren miteinander verbundenen und gemeinsam perforierten Schaumkunststoffbahn und erster Maschenwarenbahn wird dann weiterverarbeitet zu der eigentlichen Verbundstoffbahn, indem auf die Schaumkunststoffbahn oberseitig die zweite Maschenwarenbahn kaschiert wird. Diese zweite Maschenwarenbahn bildet im späteren Anwendungsfall die Oberseite der Ware, die aufgrund der erst nach erfolgter Perforierung durchgeführten Aufbringung derselben auf die Schaumkunststoffbahn unversehrt und damit optisch einwandfrei ist.

Mit einem derart aufgebauten Bezugsstoff konnte in Versuchen eine Erhöhung gegenüber wie in der DE 20 2006 009 789 U1 beschrieben hergestellten, unperforierten Bahnen mit erzielt werden. In einem unter anderen Prüfbedingungen durchgeführten Vergleichsversuch (Prüffläche 100 cm², Differenzdruck 1 mbar) konnte im Vergleich eine Verbesserung der durch diese Fläche hindurchtretenden Luftmenge von 50 bis 100 I/min (je nach Art der Perforierung und Dicke des Schaumkunststoffes) gemessen werden. Dies entsprach einer Steigerung der Luftdurchlässigkeit gegenüber unperforierten, ansonsten gleich aufgebauten Vergleichsproben von 15-30%. Diese Erhöhung der Luftdurchlässigkeit führt zu einer deutlichen Verbesserung des Sitzkomforts auf mit entsprechendem Material bezogenen Fahrzeug- oder Flugzeugsitzen. Es ergibt sich am Endprodukt des Fahrzeug- bzw. Flugzeugsitzes ein "kühleres Sitzklima" und ein verminderter Feuchtigkeitsstau.

Insbesondere wird auf die unterseitig bereits mit der ersten Maschenwarenbahn kaschierte und gemeinsam mit dieser perforierte Schaumkunststoffbahn die zweite Maschenbahn oberseitig mittels Flammkaschierung aufgebracht. Flammkaschierung eignet sich insbesondere deshalb, da sie zu einem stark anhaftenden und inniglichen Verbund führt und somit die Haltbarkeit der Verbundstoffbahn sowie die Belastbarkeit derselben deutlich erhöht.

Die erste Maschenwarenbahn, die auf der Unterseite der Kunststoffbahn angeordnet ist, ist vorzugsweise eine Charmeuse, insbesondere glatte Charmeuse aus Polyester oder Polyamid. Die Oberseite der Schaumkunststoffbahn ist hingegen bevorzugt mit einem Velours als zweite Maschenwarenbahn kaschiert, insbesondere einem Velours aus Polyester, bevorzugt ein Rundstrickvelours aus diesem Material. Velours aus diesem Material ist besonders robust und abriebfest, was insbesondere im Hinblick auf Bezugsstoffe für Fahrzeug- oder Flugzeugsitze von hoher Relevanz ist.

Das Material der Schaumkunststoffbahn ist bevorzugt ein weichelastischer geschäumter Polyurethanether und kann dabei insbesondere dem in der DE 20 2006 009 789 U1 näher beschriebenen Material entsprechen. So weist dieser Schaumkunststoff bevorzugt ein Raumgewicht von 40 bis 50 kg/m³, insbesondere 45 kg/m³, auf. Er kann zudem bevorzugt eine Stauchhärte zwischen 4,5 und 7,5 kPa aufweisen.

Die Gesamtstärke des Verbundstoffmaterials kann erfindungsgemäß im Bereich von 2 bis 20 mm liegen.

In den Figuren sind Abbildungen von Abschnitten nach dem erfindungsgemäßen Verfahren hergestellter Verbundstoffbahnen von der Unterseite her, also von der mit der ersten Maschenwarenbahn kaschierten Seite her, gezeigt, und werden nachfolgend beschrieben. Es zeigen:

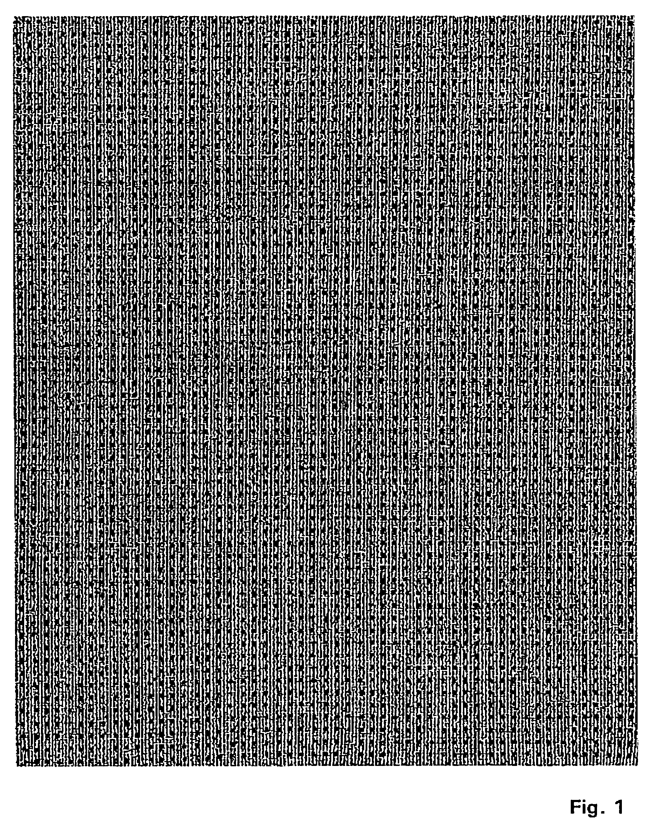

- Fig. 1:: eine Abbildung einer erfindungsgemäßen Verbundstoffbahn von der Unterseite her mit einem ersten in erfindungsgemäßer Weise in den Teilverbund aus Schaumkunststoffbahn und erster Maschenwaren- bahn eingebrachten Perforierungsmuster,
- Fig. 1:: eine Abbildung einer erfindungsgemäßen Verbundstoffbahn von der Unterseite her mit einem zweiten in erfindungsgemäßer Weise in den Teilverbund aus Schaumkunststoffbahn und erster Maschenwa- renbahn eingebrachten Perforierungsmuster und
- Fig. 1 :: eine Abbildung einer erfindungsgemäßen Verbundstoffbahn von der Unterseite her mit einem dritten in erfindungsgemäßer Weise in den Teilverbund aus Schaumkunststoffbahn und erster Maschenwaren- bahn eingebrachten Perforierungsmuster.

In den Figuren sind als verschiedene Ausgestaltungsformen Abschnitte von in ansonsten gleicher Weise hergestellten, erfindungsgemäßen Verbundstoffbahnen gezeigt, bei denen in erfindungsgemäßer Weise in den Teilverbund aus Schaumkunststoffbahn und erster Maschenwarenbahn unterschiedliche Perforierungsmuster eingebracht worden sind.

Den Kern der Verbundstoffbahnen bildet eine Kunststoffschaumlage. Diese besteht in allen drei gezeigten Beispielen aus einem Polyurethanschaumstoff der Firma Otto Bock Kunststoff aus Duderstadt mit der dort als 84060 MFK - LF bezeichneten Qualität.

Auf diese Kunststoffschaumbahn wird in einem ersten Schritt der Herstellung zunächst eine erste Maschenwarenbahn, hier eine Charmeuse-Bahn aufkaschiert. Dieser Teilverbund wird anschließend in erfindungsgemäßer Weise gemeinsam, das heißt beide Lagen zusammen, perforiert.

Auf die so vorbereitete Bahn aus Kunststoffschaumbahn und Maschenwarenbahn wird nun auf die noch freie Oberfläche der Kunststoffschaumbahn (die spätere Oberseite des Produktes) eine weitere Maschenwarenbahn, in den Ausführungsbeispielen ein Rundstrickvelours aus Polyester, aufkaschiert, in den Ausführungsbeispielen mittels Flammkaschierung. So ist dann die fertige Verbundstoffbahn gemäß der Erfindung erhalten, der auf der Oberseite eine unverletzte Maschenware aufweist.

Bei dem in Figur 1 gezeigten Ausführungsbeispiel sind Perforierungen mit einem Durchmesser von etwa 1 mm zu erkennen, die in geradlinig verlaufenden, rechtwinkelig zueinander liegenden Reihen und in benachbarten Reihen gleich geordnet positioniert angeordnet sind. Die Abstände der Perforationen in den in der Figur waagerecht verlaufenden Reihen betragen ca. 3 mm, in den in der Figur senkrecht verlaufenden Reihen betragen die Abstände der Perforationen etwa 3,3 mm. Diese Abstandsangaben beziehen sich, wie auch die folgenden stets auf die Entfernung der Mittelpunkte der Perforationen zueinander. Verbundstoffbahnen nach diesem Ausführungsbeispiel haben sich als sehr gut geeignet für die Verwendung als Bezugsstoff für Fahrzeugsitze erwiesen, sie werden derzeit für diese Anwendungen bevorzugt. Dort konnte eine Verbesserung der Luftdurchlässigkeit um 30% gegenüber einer unperforierten, ansonsten gleich gebildeten Vergleichsprobe festgestellt werden.

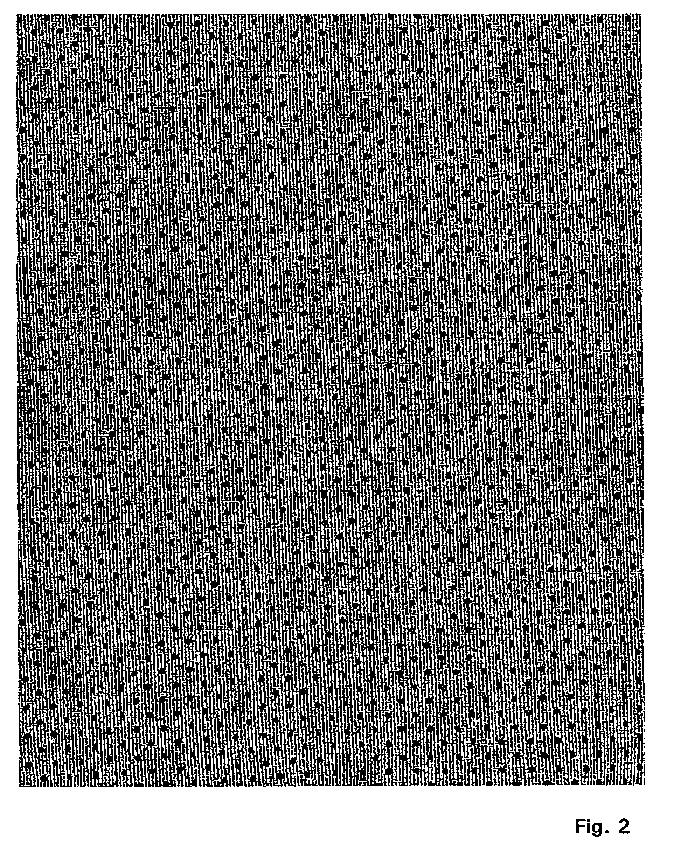

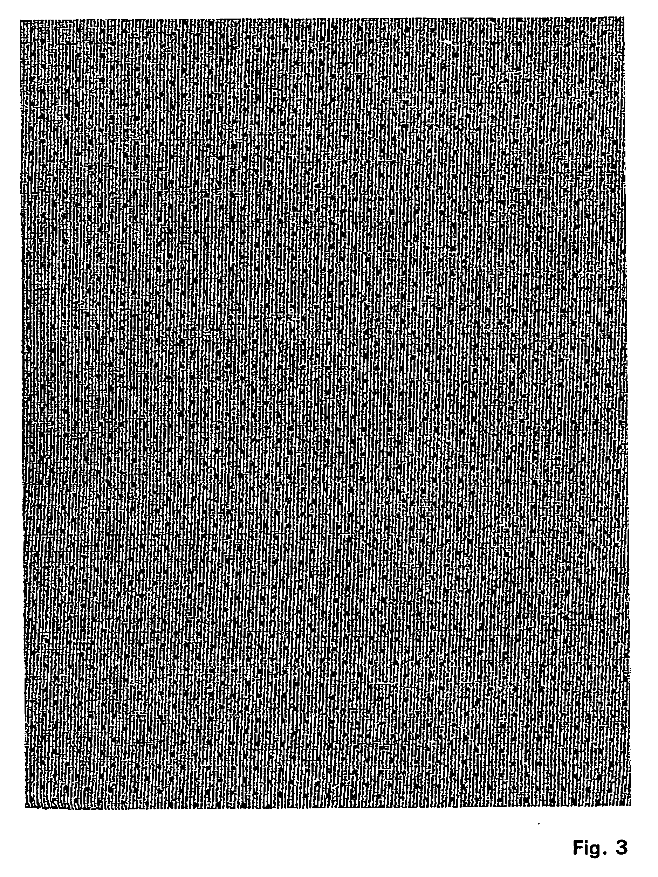

Weitere Perforationsmuster, die ebenfalls gute Ergebnisse erbracht haben, sind in den Figuren 2 und 3 gezeigt.

In dem Muster gemäß Figur 2 sind Perforationen mit einem Durchmesser von etwa 1,5 mm erneut in geradlinigen Reihen angeordnet. Auch diese verlaufen rechtwinkelig zueinander. Allerdings sind benachbarte Reihen hier um einen halben Abstand zueinander versetzt angeordnet. Die Abstände der Perforationen betragen hier in der in der Figur waagerecht gezeigten Richtung etwa 7,1 mm, in der dort senkrecht verlaufenden Richtung etwa 7,4 mm.

In dem letzten gezeigten Muster gemäß Fig. 3 sind die Perforationen erneut in geradlinigen Reihen angeordnet, die senkrecht zueinander verlaufen und in gleicher Weise wie in dem Ausführungsbeispiel nach Fig. 2 versetzt angeordnet sind. Die Perforationen sind hier kleiner als in dem zuvor beschriebenen Beispiel, sie haben ähnlich wie in dem Ausführungsbeispiel nach Fig. 1 einen Durchmesser von etwa 1 mm. Die Abstände der Perforationen betragen hier in der in der Figur waagerecht gezeigten Richtung etwa 6,2 mm, in der dort senkrecht verlaufenden Richtung etwa 6,4 mm.

Durch die drei gezeigten Ausführungsbeispiele sind Verbundstoffbahnen gezeigt und beschrieben, die entsprechende Perforationsdichten mit Perforationen bestimmten Durchmessers aufweisen. Dabei sei hier betont, dass auch andere Perforationsdurchmesser (bevorzugt in einem Bereich von 0,5 mm bis 2 mm) denkbar sind und dass auch andere Perforationsdichten (Perforationen pro cm²) im Bereich zwischen den hier offenbarten Extremen der Ausführungsbeispiele nach Figur 1 und Figur 2 sowie in etwas oberhalb sowie unterhalb der dort sich ergebenden Werte gewählt werden können.

## Patentansprüche

1. Bezugsstoff für Fahr- und Flugzeugsitze aus einer ober- und unterseitig mit je einer Maschenwarenbahn sandwichartig kaschierten Schaumkunststoffbahn, wobei die bereits unterseitig mit einer ersten Maschenwarenbahn kaschierte Schaumkunststoffbahn mit quer zu ihrer Erstreckungsebene verlaufenden Perforierungen versehen und oberseitig mit einer unverletzten zweiten Maschenwarenbahn kaschiert worden ist.

2. Bezugsstoff für Fahr- und Flugzeugsitze nach Anspruch 1, **dadurch gekennzeichnet, dass** die erste Maschenwarenbahn eine glatte Charmeuse aus Polyester oder Polyamid ist.

3. Bezugsstoff für Fahr- und Flugzeugsitze nach Anspruch 1, **dadurch gekennzeichnet, dass** die zweite Maschenwarenbahn ein Rundstrickvelours aus Polyester ist.

4. Bezugsstoff für Fahr- und Flugzeugsitze nach Anspruch 1, **dadurch gekennzeichnet, dass** das Material der Schaumkunststoffbahn ein weichelastischer geschäumter Polyurethanether ist.

5. Bezugsstoff für Fahr- und Flugzeugsitze nach einem der Ansprüche 1 bis 4, **gekennzeichnet durch** eine Gesamtstärke von 2 bis 20 mm.

6. Bezugsstoff für Fahr- und Flugzeugsitze nach einem der Ansprüche 1 bis 5, **gekennzeichnet durch** einen Schaumkunststoff mit einem Raumgewicht von 40 bis 50 kg/m³, insbesondere von 45 kg/m³.

## Claims

1. A covering material for car and aircraft seats composed of a foam plastic sheet which is laminated in a sandwich-like manner and comprising a knitted fabric web on its upperside and underside, whereas the foam plastic sheet, already laminated on its underside with a first knitted fabric web has been provided with perforations running crosswise to their extension plane and has been laminated on its upperside with an intact second knitted fabric web.

2. A covering material for car and aircraft seats according to claim 1, **characterised in that** the first knitted fabric web is a smooth charmeuse (locknit) of polyester or polyamide.

3. A covering material for car and aircraft seats according to claim 1, **characterised in that** the second knitted fabric web is a circular knitting velour fabric of polyester.

4. A covering material for car and aircraft seats according to claim 1, **characterised in that** the material of the foam plastic sheet is a soft-elastic foamed polyurethane ether.

5. A covering material for car and aircraft seats according to one of the claims 1 to 4, **characterised by** a total thickness of 2 to 20 mm.

6. A covering material for car and aircraft seats according to one of the claims 1 to 5, **characterised by** a foam plastic having a density of 40 to 50 kg/m³, in particular of 45 kg/m³.

## Revendications

1. Tissu de revêtement pour sièges d'automobile et d'avion, composé d'une bande de mousse synthétique laminée en sandwich comportant une bande de tissu tricoté au-dessus et au-dessous, dans lequel la bande de mousse synthétique laminée, déjà présentant une première bande de tissu tricoté, est pourvue de perforations s'étendant perpendiculairement à son plan d'extension et a été laminée sur son côté supérieur avec une seconde bande de tissu tricoté intacte.

2. Tissu de revêtement pour sièges d'automobile et d'avion selon la revendication 1, **caractérisé en ce que** la première bande de tissu tricoté est une charmeuse lisse en polyester ou en polyamide.

3. Tissu de revêtement pour sièges d'automobile et d'avion selon la revendication 1, **caractérisé en ce que** la seconde bande de tissu tricoté est un velours tricoté circulaire en polyester.

4. Tissu de revêtement pour sièges d'automobile et d'avion selon la revendication 1, **caractérisé en ce que** le matériau composant la bande de mousse synthétique est un éther de polyuréthane moussé souple élastique.

5. Tissu de revêtement pour sièges d'automobile et d'avion selon la revendication 1, **caractérisé par** une épaisseur totale de 2 à 20 mm.

6. Tissu de revêtement pour sièges d'automobile et d'avion selon l'une quelconque des revendications 1 à 5, **caractérisé par** une mousse synthétique d'un poids volumétrique de 40 à 50 kg/m³, en particulier de 45 kg/m³.
